# EUROPÄISCHE PATENTANMELDUNG

(11) **EP 1 136 908 A1**
(43) Veröffentlichungstag der Anmeldung: **26.09.2001**
(21) Anmeldenummer: 00106336.1
(22) Anmeldetag: 23.03.2000
(51) Int. Cl.: G06F 9/44

(54) **Programmiergerät**

(71) Anmelder: SIEMENS AKTIENGESELLSCHAFT, 80333 München (DE)
(72) Erfinder: Opaterny, Thilo, Dipl. Inf. Univ., 90453 Nurnberg (DE); Pfahlmann, Lothar, Dipl. Inf. Univ., 91083 Baiersdorf (DE)

(57) **Zusammenfassung**

Es wird ein Programmiergerät (PG) mit einem Hauptspeicher (M') und einem Zwischenspeicher (M) angegeben, in den ein selektierter Programmabschnitt in Form eines mit einer Anzeigevorrichtung (D) darstellbaren Textes transferierbar ist. Um ein Kopieren von Programmteilen und ein Wiederverwenden der kopierten Teile in einem anderen Programm oder im gleichen Programm an anderer Position zu ermöglichen, ist einerseits der Text ein strukturierter Text mit mindestens einer Operation mit jeweils einem Operationsbezeichner (101) und mindestens einem Operanden (103) sowie mindestens einem Strukturbezeichner (102,104). Andererseits ist eine vorgebbare erste Zeichenfolge anstelle eines Operationsbezeichners (101) zur Kennzeichnung eines Platzhalteroperationsbezeichners (101') und/oder eine vorgebbare zweite Zeichenfolge anstelle eines Operanden (103) zur Kennzeichnung eines Platzhalteroperanden (103') vorgesehen.

## Beschreibung

Die Erfindung betrifft ein Programmiergerät mit einem Speicher, in dem eine Repräsentation einer mindestens eine Anweisung umfassenden Steueraufgabe hinterlegt ist, und mit einem Zwischenspeicher, in den ein selektierter Teil der Repräsentation der Steueraufgabe in Form eines mit einer Anzeigevorrichtung darstellbaren Textes transferierbar ist. Unter Repräsentation einer Steueraufgabe wird insbesondere ein Programm und unter selektierter Teil der Repräsentation der Steueraufgabe ein Programmabschnitt, d. h. ein selektierter Teil des Programms verstanden.

Aus dem Fachbuch "Automatisieren mit SIMATIC S5-155U", Hans Berger, 1989, ist ein Programmiergerät bekannt, das zum Umsetzen einer Steueraufgabe in ein Steuerungsprogramm für ein Automatisierungsgerät vorgesehen ist. Alle Funktionen der Steueraufgabe werden programmiert und dabei in einer der Darstellungsarten "Anweisungsliste", "Funktionsplan" oder "Kontaktplan" beschrieben. Das Programmiergerät setzt die programmierten Funktionen unabhängig von der jeweiligen Darstellungsart in einen entsprechenden Maschinencode um. Dieser Code bildet ein Programm und enthält alle vom Anwender programmierten Steuerungsoperationen. Sobald der Code an ein Automatisierungsgerät übertragen wurde, wird er von diesem - ggf. nach einem entsprechenden Startbefehl - gelesen und ausgeführt.

Die wesentliche Funktionalität des Programmiergeräts steht mittlerweile als Softwareprogramm unter der "Windows"-Benutzeroberfläche zur Verfügung. Ein Zwischenspeicher der oben genannten Art ist daher z.B. die sogenannte Zwischenablage. Das Programmiergerät umfaßt einen Speicher, in dem eine Repräsentation einer mindestens eine Anweisung umfassenden Steueraufgabe (Programm) hinterlegt ist, und einen Zwischenspeicher, in den ein selektierter Teil der Repräsentation der Steueraufgabe (Programmabschnitt) in Form eines mit einer Anzeigevorrichtung darstellbaren Textes transferierbar ist.

Auch bei einem herkömmlichen sogenannten Personalcomputer, auf dem die entsprechende Programmiergeräte-Software unter der "Windows"-Benutzeroberfläche geladen ist, ist die Zwischenablage jederzeit verwendbar, um für spätere Eingaben verfügbare Texteingaben - z. B. die Bezeichnung eines häufig wiederkehrenden Operanden - zwischenzuspeichern.

Der Erfindung liegt die Aufgabe zugrunde, ein Programmiergerät anzugeben, mit dem ein Kopieren von Teilen des Programms und ein Wiederverwenden der kopierten Teile in einem anderen Programm oder im gleichen Programm an anderer Position möglich ist.

Diese Aufgabe wird erfindungsgemäß gelöst durch die Merkmale des Anspruchs 1. Dazu ist in einem Zwischenspeicher ein Programmabschnitt oder ein Speicherinhalt in Form eines mit einer Anzeigevorrichtung darstellbaren strukturierten Textes hinterlegt. Der Programmabschnitt wird mit dem Auslösen eines speziellen Kopier- oder Transferbefehls aus einem Speicher, z.B. aus dem Hauptspeicher, in den Zwischenspeicher transferiert. Der Speicherinhalt steht dann zur Verfügung, um in ein anderes Programm oder im gleichen Programm an anderer Position - ggf. nach einer Änderung oder Anpassung - eingefügt zu werden.

Um dieses Einfügen zu ermöglichen, zeichnet sich der Speicherinhalt dadurch aus, daß er als strukturierter Text darstellbar ist und mindestens eine Operation mit jeweils einem Operationsbezeichner, mindestens einem Operanden und mindestens einem Strukturbezeichner umfaßt. Dabei ist eine vorgebbare erste Zeichenfolge anstelle des Operationsbezeichners zur Kennzeichnung eines Platzhalteroperationsbezeichners und/oder eine vorgebbare zweite Zeichenfolge anstelle eines Operanden zur Kennzeichnung eines Platzhalteroperanden vorgesehen.

Nachdem auch ein derartiger strukturierter Text zumindest einen Abschnitt einer Beschreibung einer Steueraufgabe darstellt, umfaßt er üblicherweise Referenzen auf Elemente (z.B. Sensoren oder Aktoren) des durch das Programm gesteuerten externen technischen Prozesses. Eine solche Referenz kann in Form einer deklarativen Bezeichnung (z.B. "Motor 1") oder in Form einer auf konkrete Adressen bezogenen Bezeichnung (z.B. "A 1.0") angegeben sein. Im Programm wurden diese Referenzen nach den Vorgaben der Steueraufgabe miteinander verknüpft, so daß sich die beschriebenen Referenzen als Operanden einzelner Verknüpfungen darstellen.

Die konkrete Verknüpfungsform, die jeweils gemäß der Steueraufgabe vorzusehen ist, wird mittels eines Operationsbezeichners angegeben. Beispiele für Verknüpfungen - im folgenden synonym auch als Operationen bezeichnet - sind logische Verknüpfungen - wie z.B. UND-, ODER-, NICHT-Verknüpfungen - oder Zuweisungsoperationen.

Eine Operation umfaßt zumindest einen Operationsbezeichner und einen Operanden, welcher der durch den Operationsbezeichner festgelegten Operation/Verknüpfung unterworfen wird.
Denkbar ist auch eine Operation mit zwei oder mehr Operanden.

Die Menge der Operanden wird auch als Operandenliste bezeichnet.

Zum geeigneten Zusammenfassen von Gruppen von Operanden - also z.B. zur eindeutigen Kennzeichnung des Beginns oder des Endes der Operandenliste - oder auch einer Operation oder Gruppen von Operationen ist ein Strukturbezeichner vorgesehen.

Vorteilhaft ist damit ein effizientes Wiederverwenden ähnlicher Programmteile möglich. Die Verwendung des Platzhalteroperanden gestattet darüber hinaus z.B. auch ein Abspeichern unvollständiger Programmabschnitte. Häufig ist nämlich vorgesehen, daß ein Programmabschnitt erst dann abspeicherbar ist, wenn er vollständig ist. Ein unvollständiger Programmabschnitt ist z.B. ein Abschnitt mit einer Anweisung, innerhalb derer der konkrete Operator (noch) nicht festgelegt ist. Wird anstelle dieses noch nicht festgelegten Operators jetzt der Platzhalteropertor eingesetzt, läßt sich der unvollständige Programmabschnitt zumindest im Zwischenspeicher sichern.

In vorteilhafter Ausgestaltung ist die Struktur des Textes in der Form festgelegt, daß für jede Operation zunächst der Operationsbezeichner, darauf folgend der mindestens eine Operand und darauf folgend der mindestens eine Strukturbezeichner angegeben wird. Durch eine derartige festgelegte Struktur, d.h. die festgelegte Reihenfolge der Elemente des Textes, wird dessen Interpretation oder Analyse stark vereinfacht. Zur Unterscheidung zwischen Elementen des Programms und Elementen des strukturierten Textes werden erstere als Anweisungen und letztere als Operationen bezeichnet.

Gemäß einer weiteren vorteilhaften Ausgestaltung ist die Struktur des Textes in der Form festgelegt, daß für jede Operation zunächst der Operationsbezeichner, darauf folgend ein erster Strukturbezeichner, darauf folgend der mindestens eine Operand und darauf folgend ein zweiter Strukturbezeichner angegeben wird. Derartige, festgelegte Abfolgen der einzelnen Elemente einer Operation, bei denen der mindestens eine Operand durch den ersten und zweiten Strukturbezeichner eingeschlossen ist, erleichtern nochmals sowohl die Generierung eines solchermaßen strukturierten Textes als auch dessen Interpretation erheblich.

Strukturierte Texte der genannten Art, bei denen der Operationsbezeichner vor dem oder den Operanden steht, sind z.B. aus der sogenannten "umgekehrten polnischen Notation" bekannt, bei der z.B. die Operation "a+b" als "+(a,b)" dargestellt wird. Bei dieser umgekehrten polnischen Notation, die z.B. in der US 5,765,014 erwähnt und in der angelsächsischen Literatur auch als "reverse polish notation" oder kurz als "RPN" bekannt ist, wird der jeweilige Operationsbezeichner vor z.B. einer Klammer (dem Strukturbezeichner) angegeben. Dabei weist der Ausdruck in der Klammer eine Liste von Operanden auf, die der jeweiligen Operation unterworfen werden.

Mit dem Transfer des Programmabschnitts in den Zwischenspeicher erfolgt eine Umsetzung einer jeden Anweisung innerhalb des Abschnitts in eine Operation der oben genannten Art, die mittels der Anzeigevorrichtung als strukturierter Text darstellbar ist. Damit ist der strukturierte Text unabhängig von Format und Codierung des zugrundeliegenden Programms in einem für den Programmierer unmittelbar lesbaren und ggf. auch änderbaren Form darstellbar.

Wenn ausschließlich eine Umsetzung jeder vollständigen Anweisung innerhalb des selektierten Teils der Repräsentation der Steueraufgabe erfolgt, erleichtert dies einerseits die Umsetzung selbst und anderseits auch die Übersicht über den strukturierten Text als Ergebnis der Umsetzung.

Nachfolgend werden Ausführungsbeispiele der Erfindung anhand einer Zeichnung näher erläutert. Darin zeigen:
- FIG 1: ein schematisches Blockschaltbild eines erfindungsgemäßen Programmiergerätes,
- FIG 2: eine Operation mit Operationsbezeichner und Operand sowie mit erstem und zweitem Strukturbezeichner,
- FIG 3: eine einfache Operation,
- FIG 4: eine Operation innerhalb einer Operation,
- FIG 5: eine Zuweisungsoperation,
- FIG 6: eine Operation mit einem Platzhalteroperanden,
- FIG 7: eine Operation mit einem Platzhalteroperanden und einem Platzhalteroperationsbezeichner, und
- FIG 8: eine graphische Darstellung einer Anweisung.

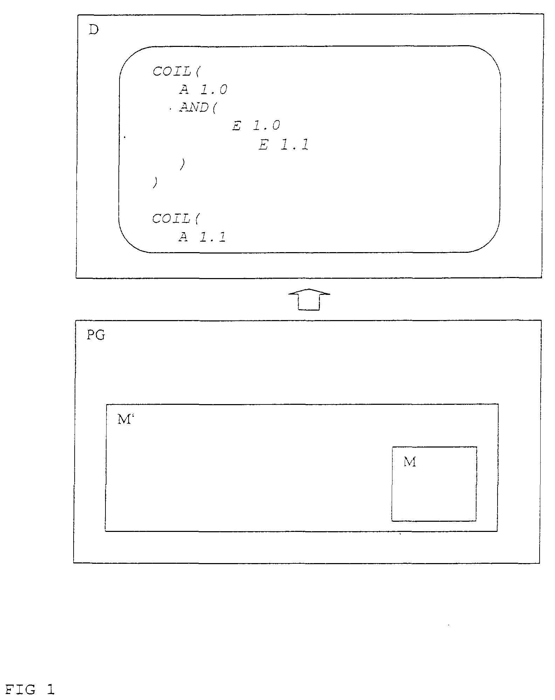

In FIG 1 ist schematisch ein Programmiergerät PG mit einem Zwischenspeicher M dargestellt. Dieser Zwischenspeicher M kann Teil eines Speichers M', z.B. des sogenannten Hauptspeichers, des Programmiergerätes PG sein. In nicht näher dargestellter Art und Weise sind dem einen Prozessor aufweisenden Programmiergerät PG übliche interne und externe Kommunikationsmittel, wie z.B. ein Bus, und Geräte zum Zugriff auf nichtflüchtige Speichermedien oder Schnittstellen zum Anschluß derartiger Geräte sowie eine Tastatur und/oder eine Zeigeeinrichtung, wie z.B. eine Maus, als Bedienungselemente zugeordnet.

Mit dem Programmiergerät PG, das auch ein sogenannter Personal Computer (PC) sein kann, ist eine Anzeigevorrichtung D verbunden, auf der ein Teil einer Steueraufgabe in Form des beispielhaft gezeigten strukturierten Textes darstellbar ist. Ein zu einer Steueraufgabe formuliertes Programm ist im Speicher M' des Programmiergerätes PG hinterlegt.

In dem Zwischenspeicher oder dem Speicherbereich M wird - nach entsprechender Selektion - ein Abschnitt des im Speicher M' hinterlegten Programms abgelegt. Aus diesem Zwischenspeicher M kann der selektierte Teil des Programms, d.h. der Speicherinhalt, in ein anderes Programm oder in dasselbe Programm an einer anderen Stelle wieder eingefügt werden.

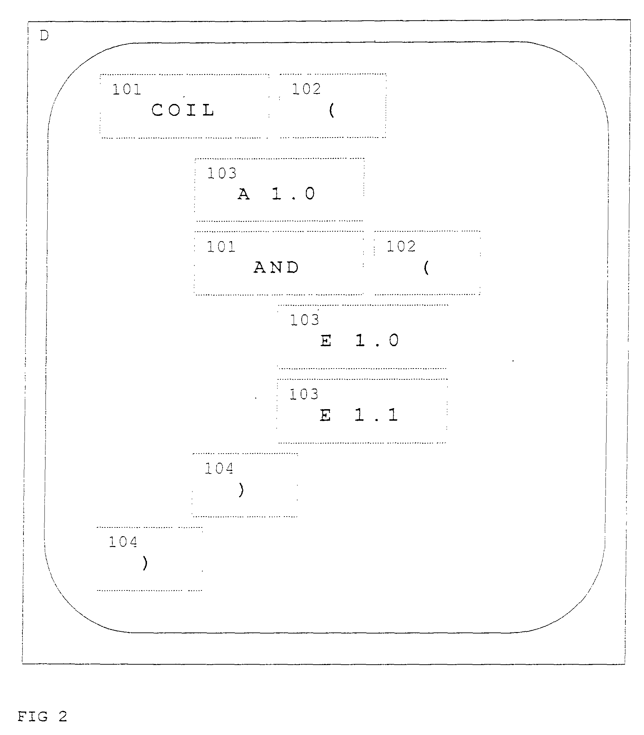

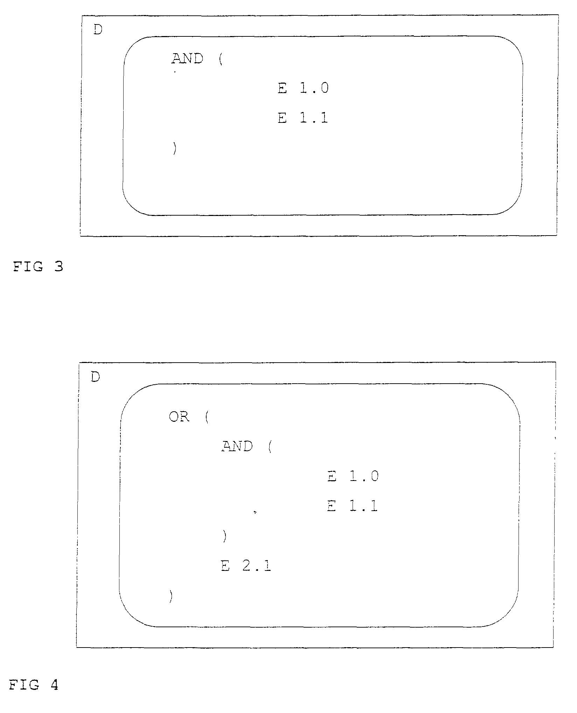

FIG 2 zeigt den in FIG 1 auf der Anzeigevorrichtung D dargestellten strukturierten Text als Operation mit einem Operationsbezeichner 101 und mit einem Operanden 103 sowie mit einem ersten und zweiten Strukturbezeichner 102 bzw. 104. Die Operation umfaßt - wie auch in FIG 4 veranschaulicht - eine äußere und eine innere Operation, d. h. eine Operation in einer Operation und weist dementsprechend zwei Operationsbezeichner 101 auf. Mit anderen Worten: Jede Operation hat ihren eigenen Operationsbezeichner 101. Einer der Operationsbezeichner 101 wird durch die Zeichenfolge COIL und der weitere Operationsbezeichner 101 durch die Zeichenfolge AND gebildet. Der eine Operationsbezeichner 101 leitet entsprechend eine Verknüpfungsoperation - in diesem Falle eine UND-Verknüpfung - ein. Derartige Verknüpfungsoperationen sind besonders einfache Operationen und werden im Zusammenhang mit FIG 3 nochmals erläutert. Der andere Operationsbezeichner 101 leitet eine Zuweisungsoperation ein, die im Zusammenhang mit FIG 4 nochmals erläutert wird.

Die Parameter einer jeden Operation sind die Operanden 103. Im Falle der inneren UND-Verknüpfung sind die Operanden 103 durch die Zeichenfolge E 1.0 bzw. E 1.1 referenzierte Eingangswerte eines zu steuernden oder zu überwachenden externen technischen Prozesses. Im Falle der äußeren Zuweisungsoperation ist einer der Operanden 103 ein durch die Zeichenfolge A 1.0 referenzierter Ausgangswert des technischen Prozesses.

Zur Erleichterung der Übersicht über die Struktur der jeweiligen Operation und zur erleichterten automatischen Generierung bzw. Interpretation derartiger Strukturen ist es vorteilhaft, dass jede Operation einen ersten Strukturbezeichner 102 und einen zweiten Strukturbezeichner 104 aufweist. Dabei wird der erste Strukturbezeichner 102 als runde öffnende Klammer und der zweite Strukturbezeichner 104 als runde schließende Klammer dargestellt. Alternative Strukturbezeichner 102, 104 sind z.B. eckige oder geschweifte Klammern oder auch "begin" und "end".

Der erste Strukturbezeichner 102 muß nicht notwendigerweise hinter dem Operationsbezeichner 101 stehen. Gleichwertig ist z.B. auch eine Struktur oder Syntax, bei der der erste Strukturbezeichner 102 auch den Operationsbezeichner 101 einschließt und damit vor diesem steht. Grundsätzlich ist bei der Mehrzahl der vorgesehenen Operationen zumindest der erste Strukturbezeichner 102 entbehrlich, da der eine Operation einleitende Operationsbezeichner 101 auch als Operationsbezeichner mit einem implizit enthaltenen ersten Strukturbezeichner 102 aufgefaßt werden kann. Die Verwendung expliziter Strukturbezeichner 102, 104 erleichtert jedoch die Lesbarkeit derartiger strukturierter Texte und vereinfacht darüber hinaus deren automatische Analyse, z.B. für eine Um- oder Übersetzung durch ein entsprechendes Computerprogramm, und deren automatische Generierung.

In FIG 3 ist auf der Anzeigevorrichtung D eine einfache Operation dargestellt, die der bereits beschriebenen inneren Verknüpfung entspricht. Diese Operation weist den durch die Zeichenfolge AND gebildeten Operationsbezeichner 102 zur Bezeichnung einer logischen UND-Verknüpfung, den ersten und zweiten Strukturbezeichner 102, 104 sowie die beiden Operanden E 1.0 und E 1.1 auf. Diese Operanden bezeichnen wiederum Eingangswerte eines gesteuerten oder überwachten externen technischen Prozesses, zu dessen Steuerung oder Überwachung ein Programm zur Lösung der zugrundeliegenden Steueraufgabe formuliert wurde.

Für jeden Operanden ist eine eigene Zeile innerhalb des strukturierten Textes vorgesehen, denn das Zeilenende trennt die Operanden eindeutig. Analog ist auch eine Darstellung möglich, in der die Operanden z.B. durch ein Komma oder ein ähnliches Zeichen getrennt sind.

Wie in FIG 4 dargestellt, ist in einer Operation als Operand auch eine typkompatible Operation verwendbar. Dies eröffnet die Möglichkeit, Operationen zu verschachteln und Operationen innerhalb einer weiteren Operation zu verwenden. Bei dieser Operation ist die Operation gemäß FIG 3 Operand der äußeren ODER-Operation. Die innere UND-Verknüpfung liefert einen boolschen Wert, der zusammen mit dem zweiten Operanden der äußeren ODER-Operation einer logischen ODER-Verknüpfung unterworfen wird.

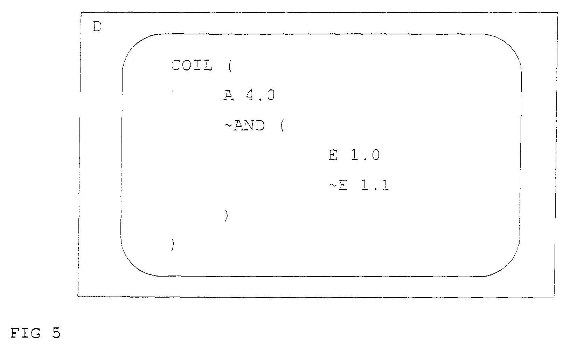

In FIG 5 ist eine einfache Operation dargestellt, deren Verknüpfungsergebnis direkt einem Operanden zugewiesen wird. Derartige Operationen werden im folgenden als Zuweisungsoperationen bezeichnet. Auch für die Zuweisungsoperation ist ein eindeutiger Operationsbezeichner 101 vorgesehen. Im Fall der in FIG 4 dargestellten Zuweisungsoperation lautet dieser Operationsbezeichner COIL. Dem erste Operand der Zuweisungsoperation wird der Wert des zweiten Operanden zugewiesen. Da hier der zweite Operand selbst eine Operation ist, wird dem ersten Operanden das Verknüpfungsergebnis dieser Operation zugewiesen. Der erste Operand bezeichnet einen sogenannten Ausgang des gesteuerten oder überwachten technischen Prozesses. Ein gesetzter Ausgang bewirkt z.B. das Starten eines Motors oder das Öffnen eines Ventils im technischen Prozeß.

Gleichfalls aus FIG 5 ist eine Form der Darstellung logisch negierter Operationen oder Operanden ersichtlich. Zur Negation wird dem jeweiligen Operanden bzw. Operationsbezeichner das sog. Tilde-Zeichen (~) vorangestellt. Gleichwertig ist auch eine Realisation, bei der die Negation durch eine entsprechende Zeichenfolge, z.B. NOT, dargestellt wird.

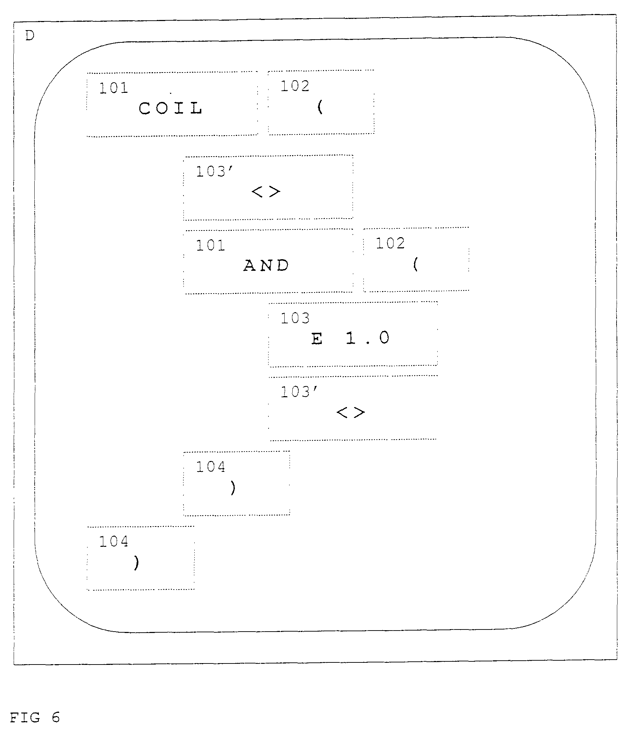

FIG 6 zeigt eine Zuweisungsoperation mit einer inneren UND-Operation und zwei Platzhalteroperanden 103'. Ein Platzhalteroperand 103' wird dabei beispielhaft durch die dargestellt Zeichenfolge eines auf ein Kleinerzeichen direkt folgenden Größerzeichens (<>) gekennzeichnet. Auch hier ist jede andere eindeutige Zeichenfolge zur Kennzeichnung eines Platzhalteroperanden 103' verwendbar. Wie nachfolgend anhand eines Beispiels näher erläutert, eignet sich eine Operation mit einem Platzhalteroperanden 103' besonders zum Ablegen im Zwischenspeicher M, um diese Operation dann in ein anderes Programm oder in das gleiche Programm an einer anderen Stelle einzufügen.

In nicht näher dargestellter Art und Weise sind zur Automatisierung eines technischen Prozesses in der Regel zumindest die Betriebsarten "Automatik" und "Handbetrieb" vorgesehen. Die jeweilige Betriebsart wird z.B. mittels eines an zentraler Stelle im technischen Prozeß positionierten Wahlschalters ausgewählt. Entsprechend der Schaltstellung des Wahlschalters wird ein Eingangswert an ein den technischen Prozeß steuerndes Automatisierungsgerät geliefert, von dem ein zur Steuerung des Prozesses vorgesehenes Programm ausgeführt wird. Wenn Handbetrieb ausgewählt wurde, lassen sich alle Motoren, Ventile, Leuchtmittel, etc. mit jeweils dafür vorgesehenen Bedienelementen steuern. Jedes dieser Bedienelemente liefert gleichfalls einen Eingangswert vom technischen Prozeß. Die Steuerung etwa eines Motors durch den jeweiligen Bedienschalter darf jedoch ausschließlich im Handbetrieb möglich sein.

Damit umfaßt eine Steueraufgabe zur vollständigen Realisierung des Handbetriebs üblicherweise eine Folge von grundsätzlich analogen Operationen, mit denen jeweils der von einem Bedienelement gelieferte Eingangswert mit dem Eingangswert für den Handbetrieb einer UND-Verknüpfung unterworfen wird und eine Zuweisung des Verknüpfungsergebnisses auf den jeweiligen Ausgangswert erfolgt.

Die innere UND-Operation der in FIG 6 dargestellten Operation umfaßt einen vorgegebenen Operanden 103, z.B. den bei ausgewähltem Handbetrieb aktiven Eingangswert, und einen Platzhalteroperanden 103'. Anstelle eines solchen Platzhalteroperanden 103' läßt sich dann der jeweils vom Bedienelement gelieferte Eingangswert oder der Ausgangswert, an den die Zuweisung des Verknüpfungsergebnisses erfolgt, einsetzen.

Wenn im Handbetrieb am Bedienelement die Vorwärtsbewegung eines durch einen Motor angetriebenen Betriebsmittels ausgewählt wird, muß der jeweilige Motor in der ausgewählten Drehrichtung gestartet werden. Für dieses Bedienelement und diese Motordrehrichtung wird also nach dem Kopieren des Speicherinhalts aus dem Zwischenspeicher M in das Steuerprogramm der erste Platzhalteroperand 103' durch den Ausgang, der den Motor in der gewünschten Drehrichtung startet, und der zweiten Platzhalteroperand 103' durch den das Bedienelement bzw. dessen Schaltstellung bezeichnenden Eingangswert ersetzt.

Um für das gleiche Betriebsmittel die Rückwärtsbewegung zu realisieren, wird der Speicherinhalt erneut in das Programm kopiert. Diesmal wird der erste Platzhalteroperand 103' durch den Ausgang, der den Motor in der entgegengesetzten Drehrichtung startet, und der zweite Platzhalteroperand 103' durch den das jeweilige Bedienelement bzw. dessen Schaltstellung bezeichnenden Eingangswert ersetzt. Wiederkehrende, ähnliche oder analoge Operationen lassen sich also mit Hilfe des Platzhalteroperanden 103' zeitsparend und effizient realisieren.

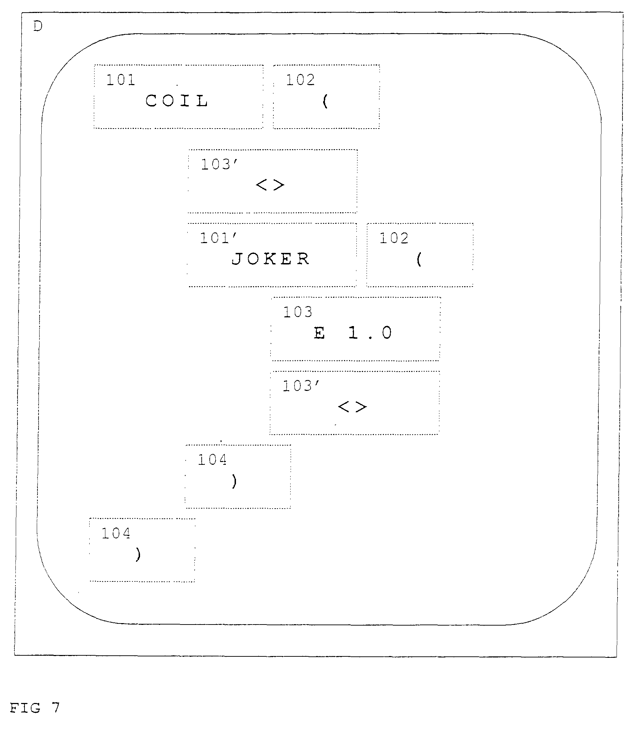

FIG 7 zeigt wiederum die Anzeigevorrichtung D des den Hauptspeicher M' und den Zwischenspeicher M aufweisenden Programmiergerätes PG, wobei in den Zwischenspeicher M ein selektierter Programmabschnitt in Form eines mit der Anzeigevorrichtung D darstellbaren Textes transferierbar ist. Dabei ist der Text wiederum ein strukturierter Text mit mindestens einer Operation mit jeweils einem Operationsbezeichner 101, mindestens einem Operanden 103 und mindestens einem Strukturbezeichner 102,104. Ferner ist eine vorgebbare erste Zeichenfolge (JOKER) anstelle eines Operationsbezeichners 101 zur Kennzeichnung eines Platzhalteroperationsbezeichners 101' und/oder eine vorgebbare zweite Zeichenfolge (<>) anstelle eines Operanden 103 zur Kennzeichnung eines Platzhalteroperanden 103' vorgesehen.

Bei der gezeigten Operation mit dem Platzhalteroperanden 103' und mit dem nachfolgend als Platzhalteroperator bezeichneten Platzhalteroperationsbezeichner 101', erweitert letzterer die mit dem Platzhalteroperanden 103' eröffnete Flexibilität nochmals. Anstelle der zur Kennzeichnung des Platzhalteroperators 101' verwendeten Zeichenfolge JOKER ist - wie auch beim Platzhalteroperanden 103' - grundsätzlich jede andere eindeutige Zeichenfolge, z. B. auch ein einzelnes Zeichen, geeignet.

Die mit dem Transfer des selektierten Teils des Programms in den Zwischenspeicher M erfolgende Umsetzung einer jeden Anweisung innerhalb des Programmabschnitts in eine Operation des mit der Anzeigevorrichtung D darstellbaren strukturierten Text geschieht wie folgt:

Die bisher beschriebenen Operationsbezeichner sind Schlüsselworte einer Programmiersprache. Wenn ein Schlüsselwort, z.B. AND, eingegeben wird, wird in einer entsprechenden Datei, d. h. in einer Quelltext-Datei gleichwohl im allgemeinen nicht die Buchstabenfolge A, N, D, sondern ein eindeutiger Code gespeichert. Dieser wird z.B. von einem Compiler, der den Quelltext zur Generierung eines lauffähigen Programms übersetzt, erkannt und als AND-Operation ausgewertet.

Diese Zuordnung kann für die beschriebenen Schlüsselwort in Form der folgenden Tabelle hinterlegt sein:

| Schlüsselwort | Zugeordneter 'Code' (exemplarisch) |
|---|---|
| AND | 0hFF01 |
| OR | 0hFF02 |
| NOT | 0hFF03 |
| COIL | 0hFF11 |
| ... | ... |
| JOKER | 0hFFA1 |
| <> | 0hFFA2 |

Analog ist auch ein Operand, z. B. E 1.0, üblicherweise nicht in Form einer Buchstaben-Zeichenfolge, sondern z.B. als eindeutige Adresse hinterlegt. Diese Zuordnung kann für die verwendbaren Operanden gleichfalls in Form einer Tabelle hinterlegt sein:

| Operand | Adresse (exemplarisch) |
|---|---|
| E 0.0 - E 0.7 | 0h0000 - 0h0007 |
| E 1.0 - E 1.7 | 0h0008 - 0h000F |
| E 2.0 - E 2.7 | 0h0010 - 0h0017 |
| E 3.0 - E 3.7 | 0h0018 - 0h001F |
| ... | ... |
| A 0.0 - A 0.7 | 0h0100 - 0h0107 |
| A 1.0 - A 1.7 | 0h0108 - 0h010F |
| A 2.0 - A 2.7 | 0h0110 - 0h0117 |
| A 3.0 - A 3.7 | 0h0118 - 0h011F |
| ... | ... |

Die einfache Operation gemäß FIG 3 könnte also - gemäß der oben exemplarisch in den Tabellen dargestellten Zuordnungs- (Codierungs-) Möglichkeiten - in einer Quelltextdatei folgendermaßen codiert hinterlegt sein:
... 00 08 FF 01 00 09 ...

Dieses codierte Fragment einer Software-Applikation stellt jetzt eine Anweisung dar, die das Programmiergerät PG, auf dem die Software-Applikation zum Ablauf gebracht wird, veranlaßt, die Inhalte der Adressen 0h'00 08' und 0h'00 09' der durch die Codierung 0h'FF 01' spezifizierten Operation - hier einer UND-Verknüpfung - zu unterwerfen.

Zur Darstellung dieser Operation in Form eines strukturierten Textes wird die Codierung wieder aufgelöst, d. h.FF01 wird zu AND, 0008 zu E 1.0 und 0009 zu E 1.1. Darüber hinaus oder optional wird eine entsprechende Formatierung - wie in den Figuren 3 bis 6 dargestellt - vorgenommen. Um diese, eine erleichterte Lesbarkeit für den Benutzer bezweckende Formatierung zu erzielen, wird mit jeder neuen Zuweisungs- (COIL) oder Verknüpfungsoperation (AND, OR, NOT) einerseits der nachfolgende Text um jeweils eine Ebene weiter eingerückt. Andererseits wird die Einrückung mit dem Auftreten des zu dieser Einrückungsebene gehörenden Strukturbezeichners um eine Ebene zurückgenommen. Eine dieser Decodierung entsprechende Umsetzung findet auch dann statt, wenn mit dem Transfer des selektierten Programmabschnitts in den Zwischenspeicher M eine Umsetzung einer jeden Anweisung innerhalb des selektierten Teils der Steueraufgabe in eine Operation des mit der Anzeigevorrichtung D darstellbaren strukturierten Text erfolgt.

Die oben dargestellte Anweisung verdeutlicht auch, daß die Abfolge, nämlich Operationsbezeichner, optionaler Strukturbezeichner, Operandenliste und Strukturbezeichner, bei der Anweisung selbst nicht verwirklicht ist.

Alternative kann die mit dem Transfer erfolgende Umsetzung einer jeden Anweisung innerhalb des selektierten Teils der Steueraufgabe in eine Operation des mit der Anzeigevorrichtung D darstellbaren strukturierten Text folgendermaßen bewirkt werden:

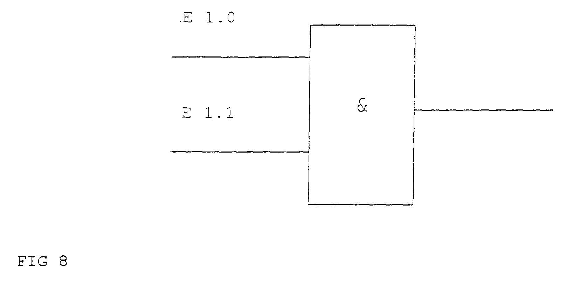

Die Operationsbezeichner sind keine Schlüsselworte einer Programmiersprache. Vielmehr wird die mit dem Operationsbezeichner assoziierte Funktionalität graphisch dargestellt. Eine derartige graphische Darstellung der auch als Funktionsplan bekannten einfachen Operation aus FIG 3 zeigt FIG 8.

Die Darstellung der weiter oben behandelten Anweisung ist grundsätzlich für einen Benutzer mit den entsprechenden Detailkenntnissen noch interpretierbar. Wenn die Anweisung im Programm isoliert und in einen Zwischenspeicher kopiert sowie modifiziert wird, ist sie ggf. sogar wiederverwendbar. Dies ist jedoch bei der Darstellung einer Anweisung gemäß FIG 8 nicht mehr möglich, da die einem Transfer zugängliche Darstellung des Programms Informationen enthält, anhand derer die graphische Darstellung erfolgt. Der Inhalt des Zwischenspeichers M ist daher solange nutzlos, bis eine Umsetzung der graphischen Informationen in eine lesbare Darstellung in Form des strukturierten Textes erfolgt.

Die Umsetzung selbst erfolgt wiederum nach dem bereits beschriebenen Prinzip. Die graphischen Informationen der Quelltext-Datei enthalten sämtliche erforderlichen Angaben zum Erkennen der vom Programmierer gewollten Operation. Dies allerdings in einer für den Menschen grundsätzlich nicht direkt lesbaren Form.

Das beschriebene Programmiergerät PG ermöglicht in besonders effektiver Art und flexibler Weise ein Wiederverwenden eines selektierten Programmabschnittes in einem anderen Programm oder im gleichen Programm an anderer Position.

## Patentansprüche

1. Programmiergerät (PG) mit einem Speicher (M'), in dem eine Repräsentation einer mindestens eine Anweisung umfassenden Steueraufgabe hinterlegt ist, und mit einem Zwischenspeicher (M), in den ein selektierter Teil der Repräsentation der Steueraufgabe in Form eines mit einer Anzeigevorrichtung (D) darstellbaren Textes transferierbar ist,
**dadurch gekennzeichnet, dass** der Text ein strukturierter Text ist, welcher mindestens eine Operation mit jeweils einem Operationsbezeichner (101) und mindestens einem Operanden (103) sowie mindestens einem Strukturbezeichner (102,104) umfaßt, wobei eine vorgebbare erste Zeichenfolge anstelle eines Operationsbezeichners (101) zur Kennzeichnung eines Platzhalteroperationsbezeichners (101') und/oder eine vorgebbare zweite Zeichenfolge anstelle eines Operanden (103) zur Kennzeichnung eines Platzhalteroperanden (103') vorgesehen ist.

2. Programmiergerät nach Anspruch 1,
**dadurch gekennzeichnet, dass** innerhalb der Operation dem Operationsbezeichner (101) der Operand (103) und diesem der Strukturbezeichner (104) folgt.

3. Programmiergerät nach Anspruch 1,
**dadurch gekennzeichnet, dass** innerhalb der Operation dem Operationsbezeichner (101) ein erster Strukturbezeichner (102) und diesem der Operand (103) sowie diesem ein zweiter Strukturbezeichner (104) folgt.

4. Programmiergerät nach einem der Ansprüche 1 bis 3,
**dadurch gekennzeichnet, dass** mit dem Transfer des selektierten Teils der Repräsentation der Steueraufgabe in den Zwischenspeicher (M) eine Umsetzung einer jeden Anweisung innerhalb des selektierten Teils der Steueraufgabe in eine Operation des mit der Anzeigevorrichtung (D) darstellbaren strukturierten Text erfolgt.

5. Programmiergerät nach Anspruch 4,
**dadurch gekennzeichnet, dass** ausschließlich eine Umsetzung jeder vollständigen Anweisung innerhalb des selektierten Teils der Repräsentation der Steueraufgabe erfolgt.
